# EUROPÄISCHE PATENTSCHRIFT

(11) **EP 0 351 620 B1**
(45) Veröffentlichungstag und Bekanntmachung des Hinweises auf die Patenterteilung: **14.12.1994**
(21) Anmeldenummer: 89112077.6
(22) Anmeldetag: 01.07.1989
(51) Int. Cl.: B32B 27/08

(54) **Heisskaschierbare Mehrschichtfolien**
Multilayer film formed by laminating by way of heat
Film multicouche, laminable à chaud

(30) Priorität: 16.07.1988 DE 3824286
(43) Veröffentlichungstag der Anmeldung: 24.01.1990
(73) Patentinhaber: Wolff Walsrode Aktiengesellschaft, D-29655 Walsrode (DE)
(72) Erfinder: Schinkel, Ingo, D. I., D-3030 Walsrode (DE); Reiners, Ulrich, Dr., D-3044 Neuenkirchen (DE); Klein, Rudi, D-3030 Walsrode 11 (DE)
(74) Vertreter: Zobel, Manfred, Dr.

(56) Entgegenhaltungen:
- EP-A- 0 229 715
- US-A- 4 629 657

## Beschreibung

Die vorliegende Erfindung betrifft heißkaschierbare, mindestens monoaxial orientierte Mehrschichtfolien mit einer heißkaschierbaren Schicht zum Herstellen eines Verbundes mit verschiedenen Substraten, wie z.B. Papier, Pappe, Kartonagen, Metall- und Kunststoffolien, Stoffbahnen, Gewebenetzen.

Mehrschichtfolien aus Polyolefinen, die eine gereckte Polypropylenbasisschicht besitzen und mit verschiedenen heißklebefähigen Stoffen, z.B. Polyethylen, Ethylenvinylacetat oder Ionomeren beschichtet sind, sind z.B. bekannt aus den japanischen Offenlegungsschriften 60-109834, 53-4082, US-A-4 629 657 und EP-A-0 263 882. Die bekannten Mehrschichtfolien weisen diverse Nachteile auf, z.B. mangelnde Verbundhaftung, Rollneigung des kaschierten Produktes, unbefriedigende optische Eigenschaften sowie Probleme bei der Weiterverarbeitung, insbesondere durch Prägung.

Eine Polypropylenfolie mit guten optischen Eigenschaften und hoher Schrumpffähigkeit ist aus EP-A 229 715 bekannt. Derartige Folien eignen sich jedoch nicht für Kaschierungen, d.h. die Herstellung von Verbunden mit verschiedenen Substraten.

Aufgabe der Erfindung war es, heißkaschierbare Mehrschichtfolien zur Verfügung zu stellen, die die aufgeführten Nachteile nicht aufweisen und sich daher als Kaschierfolien, insbesondere für die Hochglanzkaschierung, eignen.

Gegenstand der Erfindung ist eine heißkaschierbare, mindestens monoaxial orientierte Mehrschichtfolie mit einem Basisschicht I, die aus Polypropylen sowie gegebenenfalls 3 - 15 Gew.-% mit Polypropylen unverträglichen Additiven besteht, und wenigstens einer durch Wärmezufuhr heißkaschierbaren Schicht II mit copolymerisierten Ethyleneinheiten, dadurch gekennzeichnet, daß die Schicht II enthält:
50 - 95 Gew.-% Ethylenvinylacetat-Copolymer A), das zu wenigstens 70 Gew.-% aus copolymerisierten Ethyleneinheiten besteht und wenigstens ein Copolymer B:
10 - 50 Gew.-% B1) Ethylenethylacrylat-Copolymer, das zu wenigstens 88 Gew.-% aus copolymerisierten Ethyleneinheiten besteht und/oder
5 - 35 Gew.-% B2) Ethylen-Acrylsäure-Copolymer, das zu wenigstens 85 Gew.-% aus copolymerisierten Ethyleneinheiten besteht sowie gegebenenfalls zusätzlich
5 - 50 Gew.-% Polybuten B3).

In einer bevorzugten Ausführungsform besteht die Basisschicht I aus einem Polypropylen. Vorzugsweise wird ein isotaktisches Polypropylen mit einer Dichte von 0,9 - 0,91 g/cm³ und einem Schmelzflußindex von 1 - 4 g/10 min bei 230°C/21,6 N (nach DIN 53 735) verwendet.

In einer bevorzugten Ausführungsform enthält die heißkaschierbare Schicht II:
65 - 95 Gew.-% des Ethylenvinylacetat-Copolymeren A,
10 - 35 Gew.-% des Ethylen-Ethylacrylat-Copolymeren B1) und/oder
8 - 20 Gew.-% des Ethylen-Acrylsäure-Copolymeren B2) und gegebenenfalls
5 - 50 Gew.-% eines Polybutens B3), insbesondere Polybuten-1.

In einer besonders bevorzugten Ausführungsform besteht die heißkaschierbare Schicht II, abgesehen von möglicherweise vorhandenen üblichen Additiven, aus den angegebenen Copolymeren A), B1), B2) und ggfs. B3).

Das Ethylenvinylacetat-Copolymer A) enthält zu wenigsten 70 Gew.-% copolymerisierte Ethyleneinheiten, in einer bevorzugten Ausführungsform 70 - 95, insbesondere 75 - 95 Gew.-% polymerisierte Ethyleneinheiten, wobei in einer besonders bevorzugten Ausführungsform der restliche Anteil im wesentlichen oder vollständig aus polymerisiertem Vinylacetat besteht.

Das Ethylen-Ethylacrylat-Copolymer B1) enthält in einer bevorzugten Ausführungsform im wesentlichen polymerisierte Ethyleneinheiten, insbesondere wenigstens 88 Gew.-% polymerisierte Ethyleneinheiten, insbesondere 88 - 92 Gew.-% polymerisierte Polyethyleneinheiten, wobei die restlichen Anteile im wesentlichen oder vollständig aus polymerisiertem Ethylacrylat bestehen.

Das Ethylen-Acrylsäure-Copolymer B2) besteht in einer bevorzugten Ausführungsform im wesentlichen aus polymerisierten Ethyleneinheiten, insbesondere wenigstens 85 Gew.-% polymerisierten Ethyleneinheiten, besonders bevorzugt zu 85 - 95 Gew.-% aus polymerisierten Ethyleneinheiten, wobei die restlichen Anteile im wesentlichen oder vollständig aus polymerisierter Acrylsäure bestehen.

Das Polybuten B3) besteht vorzugsweise im wesentlichen oder vollständig aus polymerisiertem Buten-1.

Die Basisschicht I kann 3 bis 15 Gew.-%, vorzugsweise 8 bis 12 Gew.-% mit dem Polypropylen unverträgliche Additive, vorzugsweise anorganische Additive, wie Kalciumcarbonat, Siliciumdioxid, Natriumaluminiumsilikat und/oder Titandioxid enthalten, wodurch eine Opakisierung der Folie erreicht werden kann. Es kann aber auch ein organisches, unverträgliches Additiv fein verteilt in der Basisschicht enthalten sein, vorzugsweise Teilchen aus Polystyrol, Polymethylmethacrylat, Polytetrafluorethylen und/oder Copolymeren dieser Verbindungen. Unverträglichkeit bedeutet dabei, daß diese Polymere eine separate Phase bilden. Sie können einen anderen Schmelzpunkt und insbesondere einen anderen Elastizitätsmodul als das Polypropylen aufweisen. Beim Orientierungsprozeß der Mehrschichtfolie kommt es deshalb bei Anwesenheit derartiger Additive zum Aufreißen der Polymermatrix und damit zu einer Vakuolenbildung.

Das Ethylenvinylacetat-Copolymer A hat vorzugsweise einen Schmelzflußindex von 0,1 - 15 g/10 min bei 230°C und 21,6 N (DIN 53 735), besonders bevorzugt von 0,3 - 8 g/10 min bei 230°C und 21,6 N.

Die Copolymere B1 und B2 haben vorzugsweise einen Schmelzflußindex von 0,5 - 5 g/10 min bei 230°C und 21,6 N.

Copolymer B3 hat vorzugsweise einen Schmelzflußindex von 0,2 - 8 g/10 min bei 230°C und 21,6 N.

Die Mehrschichtfolie kann in den einzelnen Schichten die üblichen Additive und Hilfsmittel, wie z.B. Gleitmittel, Antiblockiermittel und Antistatika, in üblichen Mengen enthalten, s. z.B. EP-A-0 027 586 und EP-A-0 263 882 und die jeweils angegebene Literatur.

Die erfindungsgemäße Mehrschichtfolie kann zusätzlich zu der Basisschicht I und der heißkaschierbaren Schicht II noch weitere Schichten aufweisen. In einer besonders bevorzugten Ausführungsform weist die Basisschicht auf der der heißkaschierbaren Schicht II gegenüberliegenden Seite eine zweite heißkaschierbare Schicht auf, insbesondere eine mit der gleichen Zusammensetzung wie die heißkaschierbare Schicht II. In einer anderen bevorzugten Ausführungsform weist die Basisschicht I auf der der Schicht II gegenüberliegenden Seite eine übliche Siegelschicht auf. Siegelschichten sind beispielsweise bekannt aus der EP-A-0 027 586.

Die erfindungsgemäßen Mehrschichtfolien können nach üblichen Verfahren wie Laminierung, Beschichtung, Schmelzextrusion oder Schmelzcoextrusion produziert werden. In einer besonders bevorzugten Ausführungsform werden die Mehrschichtfolien nicht nur einmal sondern biaxial gereckt. In einer bevorzugten Ausführungsform wird die Basisschicht I extrudiert und in einer Richtung gereckt, wobei anschließend an die Reckung eine Laminierung oder Extrusion der heißkaschierbaren Schicht II erfolgt. Anschließend wird die so erhaltene Mehrschichtfolie noch einmal gereckt, vorzugsweise in die Richtung, in der noch keine Reckung vorliegt.

In einer besonders bevorzugten Ausführungsform ist wenigstens eine Seite der Folie Corona-, Flamm-, Fluor- oder Plasma-vorbehandelt.

Die einzelnen Bestandteile der heißkaschierbaren Schicht II werden vorzugsweise in einer Verfahrensstufe zusammengegeben, aufgeschmolzen und auf die Basisfolie I aufgetragen.

Die erfindungsgemäßen Mehrschichtfolien werden mindestens monoaxial, bevorzugt biaxial gereckt, wobei die Längsreckung vorzugsweise im Verhältnis 5:1 bis 7:1 und die Querreckung im Verhältnis 7:1 bis 10:1 vorgenommen wird.

In den erfindungsgemäßen Mehrschichtfolien hat die Polypropylenbasisfolie vorzugsweise eine Dicke von 1o bis 50 µm und die heißkaschierbare Schicht vorzugsweise eine Dicke von 4 bis 20 µm, besonders bevorzugt 5 bis 10 µm.

Die erfindungsgemäßen Mehrschichtfolien eignen sich besonders als Hochglanzkaschierfolien zum Herstellen von Papier- und Kartonverbunden für Buch- und Prospektbände, die auch geprägt und genutet werden können.

Gegenstand der Erfindung ist weiterhin ein Verfahren zur Herstellung einer erfindungsgemäßen Mehrschichtfolie, dadurch gekennzeichnet, daß eine Basisschicht I mit wenigstens einer durch Wärmezufuhr aktivierbaren Schicht II versehen wird.

Gegenstand der Erfindung ist weiterhin ein Verfahren zur Herstellung von Verbunden aus beliebigen Substraten und einer erfindungsgemäßen Folie, dadurch gekennzeichnet, daß man das Substrat und die Folie unter Wärmeeinwirkung und vorzugsweise nur geringem Druck zusammenführt, wobei die Schicht II der erfindungsgemäßen Folie dem Substrat zugewandt ist. Bei den Substraten handelt es sich vorzugsweise um Materialien, die üblicherweise für die Hochglanzkaschierung verwendet werden, wie z.B. Papier, Pappe, Karton, aber auch Folien, insbesondere Kunststoff- oder Metallfolien.

Zur Bestimmung der Verbundhaftung werden die Folien zusammen mit einem weißen Papier von 45 g/m² zwischen zwei rotierende Walzen geführt, wobei die der Folie zugewandte Seite auf ca. 100°C geheizt ist und die Walzen mit einem Druck von 130 N/cm bei einer Geschwindigkeit von 3 m/min zusammengepreßt werden. Anschließend werden Folie und Karton getrennt und die Verbundhaftung mit einer Zugprüfmaschine gemessen. Die Verbundhaftung wird auf einen 15 mm breiten Streifen bezogen.

### Beispiel

Eine heißkaschierbare Schicht II mit den in folgender Tabelle angegebenen Bestandteilen wird auf eine monoaxial gereckte Basisfolie aus Polypropylen der Dichte 0,905 g/cm³ und dem Schmelzindex von 3,3 g/10 min bei 230°C/21,6 N aufgetragen und anschließend gereckt, so daß eine Verbundfolie mit einer Längsreckung im Verhältnis 5 : 1 und einer Querreckung im Verhältnis 10 : 1 erhalten wird. Die Basisfolie hat eine Dicke von 15 µm und die heißkaschierbare Schicht eine Dicke von 7 µm.

**Tabelle**

| | | |
|---|---|---|
| Rezeptur | Copolymer A | 80 % Ethylenvinylacetat-Copolymer mit 21 % Vinylacetat Monomergehalt |
| | Copolymer B2 | Ethylenacrylsäure-Copolymer mit 9 % Acrylsäure Monomergehalt |
| Verbundhaftung N/15 mm | | 1,24 |
| Optische Beurteilung | | sehr gut |
| Prozentangaben in Gew.-% | | |

## Patentansprüche

1. Heißkaschierbare, mindestens monoaxial orientierte Mehrschichtfolie mit einer Basisschicht I, die aus Polypropylen sowie gegebenenfalls 3 - 15 Gew.-% mit Polypropylen unverträglichen Additiven besteht, und wenigstens einer durch Wärmezufuhr heißkaschierbaren Schicht II mit copolymerisierten Ethyleneinheiten, dadurch gekennzeichnet, daß die Schicht II enthält:
50 - 95 Gew.-% Ethylenvinylacetat-Copolymer A), das zu wenigstens 70 Gew.-% aus copolymerisierten Ethyleneinheiten besteht und wenigstens ein Copolymer B:
10 - 50 Gew.-% B1) Ethylenethylacrylat-Copolymer, das zu wenigstens 88 Gew.-% aus copolymerisierten Ethyleneinheiten besteht und/oder
5 - 35 Gew.-% B2) Ethylen-Acrylsäure-Copolymer, das zu wenigstens 85 Gew.-% aus copolymerisierten Ethyleneinheiten besteht sowie gegebenenfalls zusätzlich
5 - 50 Gew.-% Polybuten B3).

2. Folien nach Anspruch 1, dadurch gekennzeichnet, daß die Basisschicht I eine Dicke von 10 - 50 µm und die heißkaschierbare Schicht II eine Dicke von 4 - 20 µm aufweist.

3. Mehrschichtfolien nach einem der Ansprüche 1 oder 2, dadurch gekennzeichnet, daß auf der einen Seite der Basisschicht I eine heißkaschierbare Schicht II und auf der anderen Seite ebenfalls eine Schicht II oder eine Siegelschicht vorliegt.

4. Mehrschichtfolien nach wenigstens einem der vorhergehenden Ansprüche, dadurch gekennzeichnet, daß die Schicht I aus Polypropylen und aus 3 - 15 Gew.-% mit Propylen unverträglichen Additiven besteht und dadurch opak ist.

5. Mehrschichtfolie gemäß Anspruch 4, dadurch gekennzeichnet, daß als unverträgliche Additive Calciumcarbonat, Siliciumdioxid, Natriumalumosilicat und/oder Titandioxid oder unverträgliche organische Additive vorliegen.

6. Folien nach wenigstens einem der vorhergehenden Ansprüche, dadurch gekennzeichnet, daß wenigstens eine Seite der Folie Corona-, Flamm-, Fluor- oder Plasma-vorbehandelt ist.

7. Verfahren zur Herstellung einer Mehrschichtfolie gemäß Anspruch 1, dadurch gekennzeichnet, daß eine Basisschicht I mit wenigstens einer durch Wärmezufuhr heißkaschierbaren Schicht II versehen wird.

8. Verfahren zur Herstellung von Verbunden aus beliebigen Substraten und einer Folie, dadurch gekennzeichnet, daß man das Substrat und eine Folie gemäß Anspruch 1 unter Wärme- und Druckeinwirkung zusammenführt, wobei die Schicht II dem Substrat zugewandt ist.

9. Verfahren nach Anspruch 10, dadurch gekennzeichnet, daß das Substrat Papier, Pappe, Folie, Stoffbahn oder Netz ist.

## Claims

1. A heat-laminatable, at least monoaxially oriented multilayer film comprising a base layer I consisting essentially of polypropylene and optionally 3 to 15% by weight of additives incompatible with polypropylene and at least one heat-laminatable layer II containing copolymerized ethylene units, characterized in that layer II contains
50 to 95% by weight of an ethylene/vinyl acetate copolymer A) of which at least 70% by weight consists of copolymerized ethylene units and at least one copolymer B:
10 to 50% by weight of B1) an ethylene/ethylacrylate copolymer of which at least 88% by weight consists of copolymerized ethylene units and/or
5 to 35% by weight of B2) an ethylene/acrylic acid copolymer of which at least 85% by weight consists of copolymerized ethylene units and, optionally,
5 to 50% by weight of polybutene B3).

2. Films as claimed in claim 1, characterized in that the base layer I has a thickness of 10 to 50 µm and the heat-laminatable layer II a thickness of 4 to 20 µm.

3. Multilayer films as claimed in claim 1 or 2, characterized in that a heat-laminatable layer II is present on one side of the base layer I and another layer II or a sealing layer is present on the other side.

4. Multilayer films as claimed in at least one of the preceding claims, characterized in that layer I consists of polypropylene and 3 to 15% by weight of additives incompatible with propylene so that it is opaque.

5. A multilayer film as claimed in claim 4, characterized in that calcium carbonate, silicon dioxide, sodium alumosilicate and/or titanium dioxide or incompatible organic additives are present as the incompatible additives.

6. Films as claimed in at least one of the preceding claims, characterized in that at least one side of the film is corona-, flame-, fluorine- or plasma-pretreated.

7. A process for the production of the multilayer film claimed in claim 1, characterized in that a base layer I is provided with at least one heat-laminatable layer II.

8. A process for the production of composites of any substrates and a film, characterized in that the substrate and the film claimed in claim 1 are combined under the effect of heat and pressure, layer II facing the substrate.

9. A process as claimed in claim 8, characterized in that the substrate is paper, cardboard, film, fabric or netting.

## Revendications

1. Feuille à couches multiples applicable par doublages à chaud et ayant subi au moins un étirage monoaxial, comprenant une couche de base I consistant en polypropylène et le cas échéant 3 à 15 % en poids d'additifs incompatibles avec le polypropylène et au moins une couche II applicable en doublage par apport de chaleur, contenant des motifs d'éthylène copolymérisés, caractérisée en ce que la couche II contient :
50 à 95 % en poids d'un copolymère éthylène/acétate de vinyle A) consistant pour au moins 70 % en poids en motifs d'éthylène copolymérisés, et au moins un copolymère B)
10 à 50 % en poids de B1) un copolymère éthylène/acrylate d'éthyle consistant pour au moins 88 % en poids en motifs d'éthylène copolymérisés, et/ou
5 à 35 % en poids de B2) un copolymère éthylène/acide acrylique consistant pour au moins 85 % en poids en motifs d'éthylène copolymérisés, et le cas échéant en outre
5 à 50 % en poids d'un polybutène B3).

2. Feuilles selon la revendication 1, caractérisées en ce que la couche de base I à une épaisseur de 10 à 50 µm et la couche II, applicable en doublage à chaud, une épaisseur de 80 µm.

3. Feuilles à couches multiples selon l'une des revendications 1 ou 2, caractérisées en ce qu'il y a une couche II applicable en doublage à chaud sur une face de la couche de base I et également une couche II ou une couche de soudure sur l'autre face.

4. Feuilles à couches multiples selon au moins une des revendications qui précèdent, caractérisées en ce que la couche I consiste en polypropylène et 3 à 15 % en poids d'additifs incompatibles avec le polypropylène et est donc opaque.

5. Feuille à couches multiples selon la revendication 4, caractérisée en ce qu'elle contient en tant qu'additifs incompatibles du carbonate de calcium, de la silice, un aluminosilicate de sodium et/ou du bioxyde de titane ou des additifs organiques incompatibles.

6. Feuilles selon au moins une des revendications qui précèdent, caractérisées en ce que, sur un face au moins, on a soumis à un traitement préalable par décharge corona, à la flamme, au fluor ou au plasma.

7. Procédé de préparation d'une feuille à couhes multiples selon la revendication 1, caractérisé en ce que, sur une couche de base I, on applique au moins une couche II applicable en doublage à chaud par apport de chaleur.

8. Procédé pour former des combinaisons entre des supports quelconques et une feuille, caractérisé en ce que l'on met en contact le support et une feuille selon la revendication 1, sous action de la chaleur et de la pression, la couche II étant tournée vers le support.

9. Procédé selon la revendication 10, caractérisé en ce que le support consiste en papier, carton, feuille, pièce d'étoffe ou tissu à mailles.
